# EUROPEAN PATENT APPLICATION

(11) **EP 4 686 703 A1**
(43) Date of publication of application: **04.02.2026**
(21) Application number: 25191965.0
(22) Date of filing: 25.07.2025
(51) Int. Cl.: C01G 53/50

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 30.07.2024 KR 20240101144; 22.07.2025 KR 20250099215
(71) Applicant: SAMSUNG SDI CO., LTD., Yongin-si, Gyeonggi-do 17084 (KR)
(72) Inventor: KANG, Gwiwoon, 17084 Yongin-si (KR); KONG, Youngsun, 17084 Yongin-si (KR); KIM, Young-Ki, 17084 Yongin-si (KR); CHOO, Sung Ho, 17084 Yongin-si (KR); KANG, Seok Mun, 17084 Yongin-si (KR); YOON, Jaesang, 17084 Yongin-si (KR); DOO, Sungwook, 17084 Yongin-si (KR); KANG, Byungwuk, 17084 Yongin-si (KR); JUN, Dowook, 17084 Yongin-si (KR); JEONG, Jaeyoung, 17084 Yongin-si (KR)
(74) Representative: Marks & Clerk LLP

(57) **Abstract**

Disclosed are a positive electrode active material including core particles including a layered lithium nickel-manganese-based composite oxide; and an yttrium-containing coating layer on the surface of the core particles; wherein an yttrium content on the surface of the positive electrode active material, as measured by energy profiling energy dispersive spectroscopy (EP-EDS), is about 0.1 at% to about 5.0 at% based on 100 at% of the total metal excluding lithium, and the positive electrode active material according to some example embodiments may maximize or increase capacity, while minimizing or reducing a production cost, to ensure long cycle-life characteristics and improve high-voltage characteristics and high-temperature characteristics. A rechargeable lithium battery using positive electrode active material can exhibit high initial charge/discharge capacity and efficiency even under high-voltage driving conditions, can implement long cycle-life characteristics, and can effectively suppress or reduce gas generation problems due to high-voltage and high-temperature driving.

## Description

### BACKGROUND

### 1. Field

Positive electrode active materials, preparation methods thereof, positive electrodes including the same, and rechargeable lithium batteries are disclosed.

### 2, Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery having high energy density as a driving power source and/or power storage power source for hybrid and/or electric vehicles.

Various positive electrode active materials have been investigated to realize rechargeable lithium batteries for applications to the aforementioned uses. Among them, lithium nickel-based oxide, lithium nickel manganese cobalt-based composite oxide, lithium nickel cobalt aluminium-based composite oxide, and lithium cobalt-based oxide are mainly used as positive electrode active materials. However, while the demands for large-sized, high-capacity, and/or high-energy-density rechargeable lithium batteries have recently increased, the supply of a positive electrode active material including cobalt, a rare metal, is expected to be severely short. Because cobalt is expensive and lacks remaining reserves, there is an interest in developing a positive electrode active material excluding cobalt or using it in a reduced amount.

### SUMMARY

Some example embodiments of the present disclosure provide a positive electrode active material, which includes a layered lithium nickel-manganese-based composite oxide (hereinafter, may be referred as "lithium nickel-manganese-based composite oxide" for short), securing economic feasibility, high capacity, and long cycle-life characteristics and exhibiting improved high-voltage characteristics and high-temperature characteristics, a method of preparing the positive electrode active material, and a positive electrode and a rechargeable lithium battery including the same.

In some example embodiments, a positive electrode active material includes core particles including a lithium nickel-manganese-based composite oxide; and an yttrium-containing coating layer (hereinafter, may be referred as "coating layer" for short) on the surface of the core particles; wherein an yttrium content (e.g., amount) on the surface of the positive electrode active material, as measured by energy profiling energy dispersive spectroscopy (EP-EDS), is about 0.1 at% to about 5.0 at% based on 100 at% of the total metal excluding lithium.

In some example embodiments, a method for preparing a positive electrode active material includes (i) preparing core particles including a layered lithium nickel-manganese-based composite oxide; (ii) adding and mixing an yttrium raw material into an aqueous solvent to prepare a coating solution; (iii) adding and mixing the core particles into the coating solution to prepare a mixed solution; and (iv) removing the aqueous solvent from the mixed solution, and then drying and performing heat treatment on the obtained product to obtain a positive electrode active material.

In some example embodiments, a positive electrode includes a positive electrode current collector and a positive electrode active material layer on the positive electrode current collector, wherein the positive electrode active material layer includes the aforementioned positive electrode active material.

In some example embodiments, a rechargeable lithium battery includes the positive electrode, a negative electrode, and an electrolyte.

At least some of the above and other features of the invention are set out in the claims.

The positive electrode active material according to some example embodiments may maximize or increase capacity, while minimizing or reducing a production cost, to ensure long cycle-life characteristics and improve high-voltage characteristics and high-temperature characteristics. If (e.g., when) the positive electrode active material is applied to a rechargeable lithium battery, high initial charge/discharge capacity and efficiency may be achieved under high-voltage operating conditions, and long cycle-life characteristics may be realized.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIGS. 1 to 4 are schematic views schematically showing a rechargeable lithium battery according to some example embodiments.
FIGS. 5 and 6 are scanning electron microscopy (SEM) images of the positive electrode active material of Comparative Example 1.
FIGS. 7 and 8 are SEM images of the positive electrode active material of Comparative Example 2.
FIGS. 9 and 10 are SEM images of the positive electrode active material of Example 3.

### DETAILED DESCRIPTION

Hereinafter, example embodiments will be described in more detail so that those of ordinary skill in the art can easily implement them. However, the subject matter of this disclosure may be embodied in many different forms and should not be construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and/or the like, may be exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In embodiments, if (e.g., when) an element is referred to as being "directly on" another element, there are no intervening elements present.

Here, "layer" herein includes not only a shape formed on the whole surface if (e.g., when) viewed from a plan view, but also a shape formed on a partial surface.

In embodiments, the average particle diameter may be measured by any suitable generally used in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, if (e.g., when) a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

In embodiments, "or" is not to be construed as an exclusive meaning, for example, "A or B" is construed to include A, B, A+B, and the like.

In embodiments, "Metal" is interpreted as a concept including ordinary metals, transition metals and/or metalloids (semi-metals).

### Positive Electrode Active Material

In some example embodiments, a positive electrode active material includes core particles including a lithium nickel-manganese-based composite oxide; and an yttrium-containing coating layer on the surface of the core particles; wherein an yttrium content (e.g., amount) on the surface of the positive electrode active material, as measured by energy profiling energy dispersive spectroscopy (EP-EDS), is about 0.1 at% to about 5.0 at% based on 100 at% of the total metal excluding lithium.

As the price of cobalt, a rare metal, has recently risen sharply, there is a demand for the development of positive electrode active materials that exclude cobalt or reduce its content (e.g., amount). Among them, a positive electrode active material having an olivine crystal structure such as lithium iron phosphate (LFP), lithium manganese phosphate (LMP), lithium manganese iron phosphate (LMFP), and/or the like and/or a spinel crystal structure such as lithium manganese oxide (LMO) and/or the like has a limitation in realizing high capacity due to small available lithium amount within the structure. The layered lithium nickel-manganese positive electrode active material has excellent capacity and efficiency characteristics due to the high available lithium amount in the structure, making it suitable as a material for high-capacity batteries. However, as cobalt, which plays a role in the layered structure, is removed, structural stability decreases, resistance (e.g., electrical resistance) increases, and it becomes difficult to secure long cycle-life characteristics. In addition, by excluding cobalt, there is a problem that the side reaction between the positive electrode active material and the electrolyte is accelerated under high-voltage and high-temperature conditions, increasing an amount of gas generated and deteriorating the cycle-life characteristics.

In some example embodiments, a positive electrode active material is provided that maximizes or increases capacity and efficiency by coating with yttrium with a set or specific content (e.g., amount) to form a uniform (e.g., substantially uniform) coating layer, and implements long cycle-life characteristics by reducing gas generation even under high-voltage and/or high-temperature conditions.

### Core Particles

The core particles include layered lithium nickel-manganese-based composite oxide.

A nickel content (e.g., amount) based on 100 mol% of a total metal excluding lithium in the lithium nickel-manganese-based composite oxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%. If (e.g., when) the nickel content (e.g., amount) satisfies the above ranges, high capacity can be achieved and structural stability can be improved even if (e.g., when) the cobalt content (e.g., amount) is reduced. The nickel is included in the core particles, but may migrate to some of the coating layer during the coating process, and therefore the nickel content (e.g., amount) may refer to a nickel content (e.g., amount) included in the entire positive electrode active material.

A manganese content (e.g., amount) based on 100 mol% of a total metal excluding lithium in the lithium nickel-manganese-based composite oxide may be greater than or equal to about 10 mol%, for example, about 10 mol% to about 40 mol%, about 15 mol% to about 35 mol%, about 15 mol% to about 30 mol%, or about 20 mol% to about 30 mol%. If (e.g., when) the manganese content (e.g., amount) satisfies the above ranges, the positive electrode active material may improve structural stability while implementing high capacity. The manganese is included in the core particles, but may migrate to some coating layers during the coating process, and therefore the manganese content (e.g., amount) may refer to a manganese content (e.g., amount) included in the entire positive electrode active material.

The lithium nickel-manganese-based composite oxide may be for example a lithium nickel-manganese-aluminium-based composite oxide that further includes aluminium in addition to nickel and manganese. If (e.g., when) the lithium nickel-manganese-based composite oxide includes aluminium, it is advantageous to maintain a stable layered structure even if the cobalt element is excluded from the structure. An aluminium content (e.g., amount) based on 100 mol% of a total metal excluding lithium in the lithium nickel-manganese-based composite oxide may be greater than 0 mol%, greater than or equal to about 0.1 mol%, greater than or equal to about 0.5 mol%, or greater than or equal to about 1 mol%, for example greater than 0 mol% and less than or equal to about 3 mol%, about 1 mol% to about 3 mol%, about 1 mol% to about 2.5 mol%, about 1 mol% to about 2 mol%, or about 1 mol% to about 1.9 mol%. If (e.g., when) the aluminium content (e.g., amount) satisfies the above ranges, even if cobalt is excluded from the core particles, a stable layered structure can be maintained, the problem of the structure collapsing due to charge and discharge can be suppressed or reduced, and the long cycle-life characteristics of the positive electrode active material can be implemented or improved.

According to some example embodiments, the concentration of aluminium within the core particle may be uniform (e.g., substantially uniform). In embodiments, it means that there may not be a concentration gradient of aluminium from the center to the surface within the core particle, or that the aluminium concentration in the internal portion of the core particle is neither higher nor lower than in the external portion, and that the aluminium within the core particle is evenly distributed. In embodiments, the concentration gradient difference of aluminium within the core particle may be less than or equal to about 0.05 mol%, for example, about 0.01 mol% to about 0.05 mol%. This may be a structure obtained by using aluminium raw materials during precursor production without additional doping of aluminium during the synthesis of the core particles and thereby synthesizing a lithium nickel-manganese-aluminum-based composite oxide using nickel-manganese-aluminium-based composite hydroxide as a precursor. The core particle may be in the form of a secondary particle in which a plurality of primary particles are aggregated, and the aluminium content (e.g., amount) inside the primary particle may be the same or similar regardless of the location of the primary particle. In embodiments, if a primary particle is selected at a random position in the cross section of a secondary particle and the aluminium content (e.g., amount) is measured inside the primary particle rather than at its interface, regardless of the location of the primary particle, for example, whether the primary particle is close to the center of the secondary particle or close to the surface, the aluminium content (e.g., amount) may be the same/similar/uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can be improved at the same time.

The layered lithium nickel-manganese-based composite oxide may be for example represented by Chemical Formula 1.

Chemical Formula 1 Liₐ₁ Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, and Zr, and X is one or more elements selected from F, P, and S.

In Chemical Formula 1, for example, 0.9≤a1≤1.5, or 0.9≤a1≤1.2. Chemical Formula 1 may include aluminium, in which case 0.6≤x1≤0.8, 0.1≤y1≤0.39, 0.01≤z1≤0.03, and 0≤w1≤0.29 may be satisfied, and, for example, 0.6≤x1≤0.8, 0.1≤y1≤0.39, 0.01<z1≤0.03, and 0≤w1≤0.29 may be satisfied.

In Chemical Formula 1, for example, 0.6≤x1≤0.79, 0.6≤x1≤0.78, 0.6≤x1≤0.75, 0.65≤x1≤0.8, or 0.7≤x1≤0.79; 0.1≤y1≤0.35, 0.1≤y1≤0.30, 0.1≤y1≤0.29, 0.15≤y1≤0.39, or 0.2≤y1≤0.3; 0.01≤z1≤0.025, 0.01<z1≤0.02, or 0.01<z1≤0.019; and 0≤w1≤0.28, 0≤w1≤0.27, 0≤w1≤0.26, 0≤w1≤0.25, 0≤w1≤0.24, 0≤w1≤0.23, 0≤w1≤0.22, 0≤w1≤0.21, 0≤w1≤0.2, 0≤w1≤0.15, 0≤w1≤0.1, or 0≤w1≤0.09.

The layered lithium nickel-manganese-based composite oxide of the core particles may be, for example, a cobalt-free compound that does not include cobalt or includes a very small amount of cobalt, and the cobalt content (e.g., amount) based on 100 mol% of the total metal excluding lithium in the lithium nickel-manganese-based composite oxide may be about 0 mol% to about 1 mol%, for example about 0 mol% to about 0.1 mol%, about 0 mol% to about 0.01 mol%.

The core particles may be in the form of secondary particles made by aggregating a plurality of primary particles. The secondary particles may be spherical (e.g., generally spherical), elliptical (e.g., generally elliptical), polyhedral, or irregular in shape, and the primary particles may be spherical (e.g., generally spherical), elliptical (e.g., generally elliptical), plate-shaped, or a combination thereof.

The core particles are easily chemically attacked by components in the electrolyte if (e.g., when) the battery is operated under high-voltage or high-temperature conditions, so that side reactions with the electrolyte may occur frequently, and as a result, a large amount of gas is generated, which reduces the battery cycle-life and safety. However, these problems may be addressed by introducing a coating layer according to some example embodiments described below.

### Coating Layer

According to some example embodiments, a positive electrode active material is characterized in that an yttrium content (e.g., amount) of about 0.1 at% to about 5.0 at%, for example, about 0.2 at% to about 4.5 at%, about 0.3 at% to about 4.0 at%, or about 0.4 at% to about 3.6 at% based on 100 at% of the total metal excluding lithium is on the surface of the positive electrode active material as measured by EP-EDS. This may only refer to an yttrium content (e.g., amount) included in the coating layer. If (e.g., when) the yttrium content (e.g., amount) on the surface of the positive electrode active material particle satisfies the above ranges, the coating layer may have a uniform (e.g., substantially uniform) and thin thickness, which may not increase resistance (e.g., electrical resistance) of the positive electrode active material and effectively suppress or reduce a side reaction with the electrolyte and thereby, improve cycle-life characteristics of a rechargeable lithium battery under high-voltage and high-temperature conditions.

The yttrium content (e.g., amount) in the coating layer may be about 0.1 mol% to about 3.0 mol%, for example, about 0.1 mol% to about 2.8 mol%, about 0.1 mol% to about 2.6 mol%, about 0.1 mol% to about 2.4 mol%, about 0.1 mol% to about 2.2 mol%, or about 0.2 mol% to about 2.0 mol% based on 100 mol% of the total metal excluding lithium in the positive electrode active material. If (e.g., when) the yttrium content (e.g., amount) satisfies the above ranges, the positive electrode active material can effectively suppress or reduce side reactions with the electrolyte and effectively reduce the amount of gas generated under high-voltage or high-temperature conditions by forming a good coating layer without decreasing the capacity or increasing the resistance (e.g., electrical resistance).

The coating layer according to some example embodiments may be in a form of a film that continuously surrounds the surface of the core particle, for example, may be in the form of a shell that surrounds the entire surface of the core particle. This is distinct from a structure in which only portion of the surface of the core particle is partially coated. According to some example embodiments, the coating layer may be formed to entirely cover the surface of the core particle and may be formed to be very thin and uniform (e.g., substantially uniform) in thickness, and therefore the positive electrode active material does not increase resistance (e.g., electrical resistance) or decrease capacity, improves structural stability, effectively suppresses or reduces side reactions with electrolytes, reduces the amount of gas generated under high-voltage and high-temperature conditions, and achieves long cycle-life characteristics.

A thickness of the coating layer according to some example embodiments may be about 30 nm to about 500 nm, for example, about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. If (e.g., when) the coating layer satisfies the above thickness ranges, the structural stability of the positive electrode active material may be improved without increasing resistance (e.g., electrical resistance) or reducing capacity due to the coating layer, and the side reaction with the electrolyte may be effectively suppressed or reduced. The thickness of the coating layer may be measured through, for example, time-of-flight secondary ion mass spectrometry (TOF-SIMS), X-ray photoelectron spectroscopy (XPS), or energy-dispersive X-ray spectroscopy (EDS) analysis, and the thickness range of the coating layer may be measured through transmission electron microscopy- energy-dispersive X-ray spectroscopy (TEM-EDS) line profile.

The coating layer according to some example embodiments may be thin and uniform (e.g., substantially uniform) in thickness, at the level of tens to hundreds of nanometers. For example, the deviation in coating layer thickness within one positive electrode active material particle may be less than or equal to about 20%, less than or equal to about 18%, or less than or equal to about 15%. In embodiments, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above range means that a coating layer of uniform (e.g., substantially uniform) thickness is well formed in the form of a film on the surface of the positive electrode active material particle. Accordingly, the structural stability of the positive electrode active material is improved, side reactions with the electrolyte are effectively suppressed or reduced, and the increase in resistance (e.g., electrical resistance) or decrease in capacity due to the coating layer can be minimized or reduced.

In embodiments, the coating layer may further include nickel, manganese, or a combination thereof in addition to yttrium. Nickel and manganese may be included in the core particles and introduced during the coating layer formation process, and their contents (e.g., amounts) are not particularly limited. A coating layer according to some example embodiments essentially includes yttrium and optionally includes nickel and manganese, and is formed to have a thin and uniform (e.g., substantially uniform) thickness, thereby improving the high-voltage characteristics of the positive electrode active material and enhancing cycle-life characteristics.

The average particle diameter (D₅₀) of the positive electrode active material according to some example embodiments is not particularly limited. The positive electrode active material may be, for example, secondary particle-shaped large particles, and an average particle diameter (D₅₀) thereof may be, for example, about 2 µm to about 18 µm, about 11 µm to about 16 µm, or about 12 µm to about 15 µm. As used herein, if (e.g., when) a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscopic image for positive electrode active materials. If the average particle diameter of the positive electrode active material satisfies the above ranges, high capacity and long cycle-life can be realized and it can be advantageous to form a coating layer according to some example embodiments.

A cobalt content (e.g., amount) in the positive electrode active material according to some example embodiments may be, for example, less than or equal to about 1 mol%, less than or equal to about 0.1 mol%, less than or equal to about 0.01 mol%, less than or equal to about 0.005 mol%, or less than or equal to about 0.001 mol%, for example, about 0 mol% to about 1 mol%, about 0 mol% to about 0.1 mol%, about 0 mol% to about 0.01 mol%, about 0 mol% to about 0.005 mol%, or about 0 mol% to about 0.011 mol% based on 100 mol% of a total metal excluding lithium.

In some example embodiments, the positive electrode active material may not include sodium. In general, sodium ions can be used in the preparing process of a positive electrode active material, but according to the preparing method described herein, core particles having a stable structure and a coating layer of uniform (e.g., substantially uniform) thickness can be formed without using sodium ions.

### Method for Preparing Positive Electrode Active Material

In some example embodiments, a method for preparing a positive electrode active material includes (i) preparing core particles including a layered lithium nickel-manganese-based composite oxide; (ii) adding and mixing an yttrium raw material into an aqueous solvent to prepare a coating solution; (iii) adding and mixing the core particles into the coating solution to prepare a mixed solution; and (iv) removing the aqueous solvent from the mixed solution, and then drying and performing heat treatment on the obtained product to obtain a positive electrode active material.

In embodiments, the yttrium content (e.g., amount) in the yttrium raw material may be about 0.1 mol% to about 3.0 mol%, for example, about 0.1 mol% to about 2.8 mol%, about 0.1 mol% to about 2.6 mol%, about 0.1 mol% to about 2.4 mol%, about 0.1 mol% to about 2.2 mol%, or about 0.2 mol% to about 2.0 mol% based on 100 mol% of the total metal excluding lithium in the positive electrode active material. The aforementioned positive electrode active material may be prepared through the above method.

In a method for preparing a positive electrode active material according to some example embodiments, the preparing of core particles including a layered lithium nickel-manganese-based composite oxide includes mixing a nickel-manganese-based composite hydroxide and a lithium raw material and performing a first heat treatment. The layered nickel-manganese-based composite hydroxide as a precursor of core particles, may be in the form of secondary particles in which a plurality of primary particles are aggregated, may not include cobalt or may include a very small amount, for example, may be a cobalt-free nickel-manganese-based composite hydroxide. The nickel-manganese-based composite hydroxide may be prepared by a general coprecipitation method.

In the above nickel-manganese-based composite hydroxide, the nickel content (e.g., amount) based on 100 mol% of the total metal may be about 60 mol% to about 80 mol%, for example, about 65 mol% to about 80 mol%, about 70 mol% to about 80 mol%, about 60 mol% to about 79 mol%, about 60 mol% to about 78 mol%, or about 60 mol% to about 75 mol%. If (e.g., when) the nickel content (e.g., amount) satisfies the above ranges, high capacity can be achieved and structural stability can be improved even if (e.g., when) the cobalt content (e.g., amount) is reduced.

In the above nickel-manganese-based composite hydroxide, the manganese content (e.g., amount) based on 100 mol% of the total metal may be greater than or equal to about 10 mol%, for example, about 10 mol% to about 40 mol%, about 15 mol% to about 35 mol%, about 15 mol% to about 30 mol%, or about 20 mol% to about 30%. If (e.g., when) the manganese content (e.g., amount) satisfies the above ranges, the structural stability of the positive electrode active material can be improved while implementing high capacity, and the production price can be lowered to improve economic feasibility.

In embodiments, if (e.g., when) the nickel-manganese-based composite hydroxide further includes aluminium, the aluminium content (e.g., amount) based on the total 100 mol% of the metal may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%. If (e.g., when) the aluminium content (e.g., amount) in the above nickel-manganese-based composite hydroxide satisfies the above ranges, the structural stability of the positive electrode active material can be improved while implementing high capacity, and the production price can be lowered to improve economic feasibility.

In a method for preparing a positive electrode active material according to some example embodiments, in the preparation of core particles, aluminium is not additionally doped, but an aluminium raw material may be used to prepare a precursor, so that a nickel-manganese-aluminium-based composite hydroxide, in which aluminium is uniformly (e.g., substantially uniformly) dispersed in the structure, may be used as the precursor. If (e.g., when) such a precursor is used, the positive electrode active material may stably maintain a layered structure without cobalt despite repeated charges and discharges, and aluminium byproducts and/or aluminium aggregates may not be formed, thereby improving capacity and efficiency characteristics and cycle-life characteristics of the positive electrode active material.

In the nickel-manganese-based composite hydroxide, the cobalt content (e.g., amount) based on 100 mol% of the total metal may be less than or equal to about 1 mol%, less than or equal to about 0.1 mol%, less than or equal to about 0.01 mol%, less than or equal to about 0.005 mol%, or less than or equal to about 0.001 mol%, for example, about 0 mol% to about 1 mol%, about 0 mol% to about 0.1 mol%, about 0 mol% to about 0.01 mol%, about 0 mol% to about 0.005 mol%, or about 0 mol% to about 0.001 mol%. In the layered nickel-manganese-based composite hydroxide, the cobalt content (e.g., amount) may be less than or equal to about 0.01 mol%, less than or equal to about 0.005 mol%, or less than or equal to about 0.001 mol% based on 100 mol% of a total metal.

The nickel-manganese-based composite hydroxide may be for example represented by Chemical Formula 2.

Chemical Formula 2 Niₓ₂Mn_{y2}Al_{z2}M²_{w2}(OH)₂

In Chemical Formula 2, 0.6≤x2≤0.8, 0.1≤y2≤0.4, 0≤z2≤0.03, 0≤w2≤0.3, and 0.9≤x2+y2+z2+w2≤1.1, and M² is one or more elements selected from B, Ba, Ca, Ce, Cr, Fe, Mg, Mo, Nb, Si, Sn, Sr, Ti, V, W, and Zr.

In Chemical Formula 2, for example, 0.6≤x2≤0.8, 0.1≤y2≤0.39, 0.01≤z2≤0.03, 0≤w2≤0.29.

The nickel-manganese-based composite hydroxide may be in the form of particles, and the average particle diameter (D₅₀) of the particles may be about 10 µm to about 18 µm, about 11 µm to about 16 µm, or about 12 µm to about 15 µm.

The nickel-manganese-based composite hydroxide and the lithium raw material may be mixed in a molar ratio of about 1:0.9 to about 1:1.8, for example about 1:0.9 to about 1:1.5, or about 1:1 to about 1:1.2.

The first heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours.

A lithium nickel-manganese-based composite oxide may be obtained through the first heat treatment. In the obtained lithium nickel-manganese-based composite oxide, the nickel content (e.g., amount) based on 100 mol% of the total metal excluding lithium may be about 60 mol% to about 80 mol%, the manganese content (e.g., amount) may be greater than or equal to about 10 mol%, the aluminium content (e.g., amount) may be about 0 mol% to about 3 mol%, and the cobalt may be included in a very small amount of about 0 mol% to about 1 mol%. Such a lithium nickel-manganese-based composite oxide has a significantly different residual lithium content (e.g., amount) and different surface characteristics from an oxide with other compositions, for example, an other nickel-based oxide such as a lithium nickel-cobalt-manganese-based composite oxide and/or a lithium nickel-cobalt-aluminium-based composite oxide, and/or the like, other coating methods may not succeed in forming a good coating layer thereon in the form of a uniform (e.g., substantially uniform) film. In some example embodiments, a method is applied to improve high-voltage and high-temperature characteristics by uniformly (e.g., substantially uniformly) forming a coating layer with a very thin thickness on the surface of a lithium nickel-manganese-based composite oxide with a very small amount of cobalt and a nickel content (e.g., amount) of greater than or equal to about 60 mol%.

In some example embodiments, the coating layer may be formed by adding and mixing an yttrium raw material to an aqueous solvent to prepare a coating solution, adding and mixing core particles including a lithium nickel-manganese-based composite oxide obtained through a first heat treatment to the solution, and then performing drying and a second heat treatment. This is a salt-dissolving wet coating method, and may be a pre-addition method in which the salt, which is the coating raw material, is first completely dissolved and then the active material particles are added.

The aqueous solvent may include distilled water, an alcohol-based solvent, or a combination thereof. The yttrium raw material may include, for example, yttrium nitrate, yttrium sulfate, yttrium carbonate, yttrium hydroxide, or a combination thereof. The yttrium raw material is a raw material for forming a coating layer, and the yttrium content (e.g., amount) in the yttrium raw material may be designed to be about 0.1 mol% to about 3.0 mol%, for example, about 0.1 mol% to about 2.8 mol%, about 0.1 mol% to about 2.6 mol%, about 0.1 mol% to about 2.4 mol%, about 0.1 mol% to about 2.2 mol%, or about 0.2 mol% to about 2.0 mol% based on 100 mol% of the total metal excluding lithium in the positive electrode active material finally obtained. If the content (e.g., amount) of the coating raw material is designed to have the above ranges, the coating layer may be formed to have a thin and uniform (e.g., substantially uniform) thickness of tens or hundreds of nanometers, which may reduce an amount of gas generated of a rechargeable lithium battery under high-voltage and/or high-temperature operating conditions and improve high capacity and long cycle-life characteristics.

The coating solution in which the yttrium raw material is added and mixed in the above-mentioned aqueous solvent may have a pH of about 1.5 to about 3.5, for example, about 2.0 to about 3.4, about 2.5 to about 3.3, about 2.7 to about 3.3, or about 2.9 to about 3.2.

The core particles are added into the coating solution and mixed for about 5 minutes to about 80 minutes, or about 5 minutes to about 60 minutes, or about 5 minutes to about 40 minutes. After the mixing, the mixed solution may have pH of about 4.5 to about 8.5, for example about 5.0 to about 8.0, about 5.5 to about 7.5, or about 6.0 to about 7.0. If (e.g., when) these conditions are satisfied, it is advantageous to form a coating layer having a uniform (e.g., substantially uniform) thickness.

Drying after the above mixing process can be understood as a process of removing the solvent, and can be performed at, for example, about 40 °C to about 240 °C, about 100 °C to about 220 °C, or about 150 °C to about 200 °C.

If the heat treatment of a nickel-manganese-based composite hydroxide and a lithium raw material is expressed as the first heat treatment, the heat treatment of the obtained product after removing the solvent from the mixed solution and drying it may be referred to the second heat treatment. The second heat treatment may be understood as a process of forming a coating layer, and may be performed, for example, in an oxygen atmosphere at a temperature range of about 700 °C to about 850 °C, or about 750 °C to about 840 °C for about 2 hours to about 20 hours, or about 3 to about 10 hours. In embodiments, the second heat treatment temperature may be lower than the first heat treatment temperature, and the second heat treatment time may be the same as or shorter than the first heat treatment time. A suitable or desired coating layer can be obtained by performing a second heat treatment under these conditions.

### Positive Electrode

In some example embodiments, a positive electrode includes a positive electrode current collector and a positive electrode active material layer on the positive electrode current collector, wherein the positive electrode active material layer includes the aforementioned positive electrode active material. The positive electrode active material layer may further include other types (or kinds) of positive electrode active materials in addition to the positive electrode active materials described above. In embodiments, the positive electrode active material layer may optionally further include a binder, a conductive material (e.g., an electrically conductive material), or a combination thereof.

According to some example embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². If (e.g., when) applying a positive electrode active material according to some example embodiments, it is advantageous to implement such a loading level, and a positive electrode satisfying the loading level in the above ranges is suitable for implementing a high-capacity, high-energy-density rechargeable lithium battery.

The loading level refers to a ratio of the weight to the area of the positive electrode active material layer. In embodiments, electrodes may be manufactured by coating a slurry including an electrode active material to a current collector, drying, and compressing. The loading level may refer to one of the conditions designed during the process of coating the electrode active material slurry to the current collector. For example, the loading level may be calculated as a weight ratio of the electrode active material layer to a cross-sectional area if (e.g., when) the electrode slurry is coated on the current collector before drying and compressing the electrode plate. It may be understood that the higher the loading level, the more electrode active material slurry is coated, and the thicker the electrode active material layer becomes. In embodiments, the electrode active material slurry includes an electrode active material and a solvent, and may optionally include a binder and/or a conductive material (e.g., an electrically conductive material). The electrode plate may also be manufactured by a dry process, in which case the electrode active material layer is formed on a current collector without using a solvent and then compressed to manufacture the positive electrode, and the loading level may mean a ratio of a weight to the area of the electrode active material layer before compressing.

In embodiments, a density of the positive electrode active material layer in the final compressed positive electrode may be about 3.3 g/cc to about 3.7 g/cc, for example about 3.3 g/cc to about 3.6 g/cc, or about 3.4 g/cc to about 3.58 g/cc. If (e.g., when) applying the positive electrode active material according to some example embodiments, it is advantageous to implement the density of the positive electrode active material layer, and a positive electrode satisfying the density of the positive electrode active material layer within the above ranges is suitable for implementing a high-capacity, high-energy-density rechargeable lithium battery.

The density of the positive electrode active material layer means a ratio of a weight to a volume of the positive electrode active material layer in the compressed positive electrode, and may be expressed as the mixture density or the electrode plate density. The density of the positive electrode active material layer may be measured by coating a positive electrode active material slurry on a positive electrode current collector, drying and compressing to manufacture a positive electrode, cutting the positive electrode to a size of about 30 mm x 30 mm, measuring the thickness and weight of the positive electrode active material layer excluding the positive electrode current collector, calculating the volume by multiplying the cross-sectional area of the positive electrode active material layer by the thickness, and dividing the weight by the volume. In embodiments, the positive electrode active material slurry includes a positive electrode active material and a solvent, and may optionally include a binder and/or a conductive material (e.g., an electrically conductive material). After coating the positive electrode active material slurry, drying and compressing may be performed, for example, by drying at 80 °C and compressing at a pressure of about 50 MPa for 3 seconds. The electrode plate can also be manufactured by a dry process, in which embodiments a layer of positive electrode active material is formed on a current collector without using a solvent, and then compressed to manufacture the positive electrode. The area, thickness, and weight of the positive electrode active material layer in the compressed state can be measured, and the weight can be divided by the volume to measure the plate density. Dry compressing of the plate may involve, for example, compressing at a pressure of about 3 tons for 30 seconds.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

### Conductive Material

The conductive material is included to provide or increase electrode conductivity (e.g., electrical conductivity) and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

Each content (e.g., amount) of the binder and the conductive material may be about 0.5 wt% to about 5 wt%, based on 100 wt% of the positive electrode active material layer.

The positive electrode current collector may include Al, but is not limited thereto.

### Rechargeable Lithium Battery

Some example embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

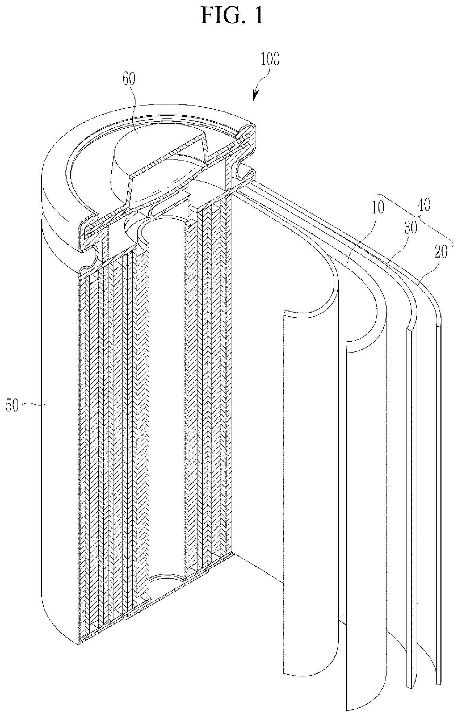

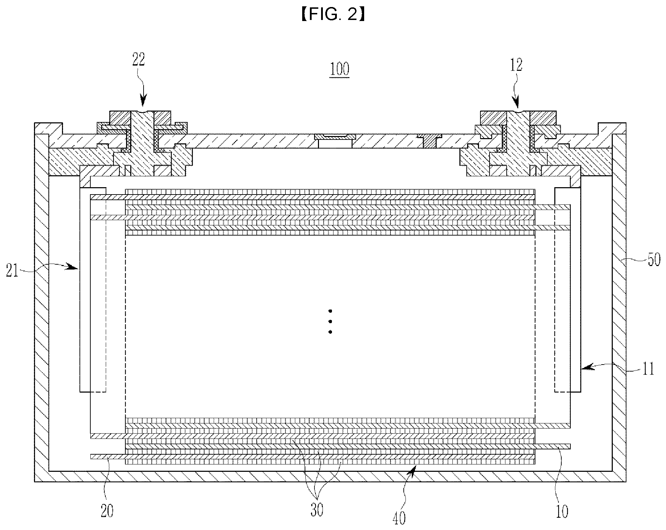

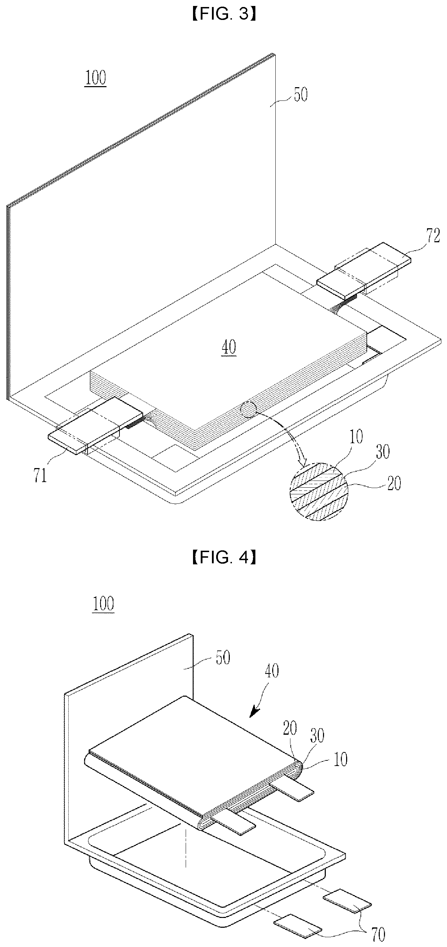

The rechargeable lithium battery may be classified into cylindrical, prismatic, pouch, coin, or the like depending on the shape. FIGS. 1 to 4 are schematic views showing the rechargeable lithium battery according to some example embodiments, where FIG. 1 is a cylindrical battery, FIG. 2 is a prismatic battery, and FIGS. 3 and 4 are each a pouch-shaped battery. Referring to FIGS. 1 to 4, a rechargeable lithium battery 100 includes an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 (FIG. 4), for example, a positive electrode tab 71 and a negative electrode tab 72 (FIG. 3) that serve as an electrical path for inducing the current formed in the electrode assembly 40 to the outside.

The rechargeable lithium battery according to some example embodiments may be rechargeable at a high voltage, and/or may be suitable for being driven at a high voltage. For example, the charging voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to some example embodiments, the rechargeable lithium battery can significantly reduce an amount of gas generated even if (e.g., when) charged at high voltage and can achieve high capacity and long cycle-life characteristics.

### Negative Electrode

The negative electrode may include a current collector and a negative electrode active material layer on the current collector, and may further include a negative electrode active material, a binder, a conductive material (e.g., an electrically conductive material), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0<x≤2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

If the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, and/or in an oxidized form. The oxidized form of silicon may be represented by SiOₓ (0<x≤2). In embodiments, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where a cumulative volume is about 50 volume% in a particle size distribution.

The Si-based negative electrode active material and/or Sn-based negative electrode active material may be mixed with the carbon-based negative electrode active material. If (e.g., when) the Si-based negative electrode active material and/or Sn-based negative electrode active material and the carbon-based negative electrode active material are mixed and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming a fiber (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide or increase electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

For example, the electrolyte for a rechargeable lithium battery may be an electrolyte solution, which may include a non-aqueous organic solvent and a lithium salt.

The non-aqueous organic solvent serves as a medium to transmit ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds), and if (e.g., when) two or more types (or kinds) are used in a mixture, a mixing ratio can be suitably or appropriately adjusted according to suitable or desired battery performance, which should be apparent to those working in the field upon reviewing this disclosure.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

A concentration of lithium salt may be within the range of about 0.1 M to about 2.0 M. If the concentration of lithium salt is within the above range, the electrolyte solution has suitable or appropriate ionic conductivity and viscosity, and thus excellent performance can be achieved and lithium ions can move effectively.

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both (e.g., two opposing) surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g. TEFLON), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Preparation of Positive Electrode Active Material

Ni_{0.75}Mn_{0.24}Al_{0.01}(OH)₂ and LiOH were mixed in a molar ratio of 1:1.05 and then, a first heat treatment was performed at 845 °C under an oxygen atmosphere for 8 hours to prepare a lithium nickel-manganese-based composite oxide in the form of secondary particles having a composition of Li_{1.05}Ni_{0.75}Mn_{0.24}Al_{0.01}O₂ and an average particle diameter (D₅₀) of about 14 µm.

A coating solution was prepared by pouring 600 g of distilled water and yttrium nitrate in a 1 L reactor and then, stirring them at about 350 rpm for about 5 minutes to dissolve the salt (yttrium nitrate). It was confirmed that the salt was completely dissolved in the coating solution, which was colorless and transparent. While continuously stirring the coating solution, 500 g of the lithium nickel-manganese-based composite oxide was added thereto for 1.5 minute and then, stirred for 30 minutes. Herein, an yttrium content (e.g., amount) in the yttrium nitrate was designed to be 0.2 mol% based on 100 wt% of a total metal excluding lithium in a final positive electrode active material.

Subsequently, a coated product was obtained by removing the solvent from the mixed solution with an aspirator and a filter press and vacuum-drying the residue at 190 °C.

The coated product was performed with a second heat treatment at 750 °C for 8 hours under an oxygen atmosphere, preparing the final positive electrode active material.

### 2. Preparation of Rechargeable Lithium Battery Cell

98.5 wt% of the prepared positive electrode active material, 1.0 wt% of a polyvinylidene fluoride binder, and 0.5 wt% of a carbon nanotube conductive material were mixed to prepare a positive electrode active material layer slurry (positive electrode active material slurry) based on the total amount of the positive electrode active material layer slurry, and the positive electrode active material layer slurry was coated on an aluminium foil current collector and then, dried and compressed to prepare a positive electrode. Herein, the positive electrode active material layer had a loading level of 20 mg/cm², and the final compressed positive electrode had density of about 3.4 g/cc.

A negative electrode active material layer slurry was prepared by mixing 97.5 wt% of a graphite negative electrode active material, 1.5 wt% of carboxymethyl cellulose, and 1 wt% of a styrene butadiene rubber in a water solvent based on the total amount of the negative electrode active material layer slurry. The negative electrode active material layer slurry was coated on a copper foil current collector and then, dried and compressed to prepare a negative electrode.

A polytetrafluoroethylene separator and an electrolyte solution prepared by mixing ethylene carbonate and dimethyl carbonate in a volume ratio of 3:7 and dissolving 1 M LiPF₆ in the mixed solvent were used in a conventional method to prepare a rechargeable lithium battery cell.

### Example 2

A positive electrode active material and a rechargeable lithium battery cell were prepared substantially in the same manner as in Example 1 except that the yttrium content (e.g., amount) in the yttrium nitrate in preparing the positive electrode active material was changed to 0.5 mol% based on 100 mol% of the total metal excluding lithium of the final positive electrode active material.

### Example 3

A positive electrode active material and a rechargeable lithium battery cell were prepared substantially in the same manner as in Example 1 except that the yttrium content (e.g., amount) in the yttrium nitrate in preparing the positive electrode active material was changed to 1.0 mol% based on 100 mol% of the total metal excluding lithium of the final positive electrode active material.

### Example 4

A positive electrode active material and a rechargeable lithium battery cell were prepared substantially in the same manner as in Example 1 except that the yttrium content (e.g., amount) in the yttrium nitrate in preparing the positive electrode active material was changed to 2.0 mol% based on 100 mol% of the total metal excluding lithium of the final positive electrode active material.

### Comparative Example 1

A positive electrode active material and a rechargeable lithium battery cell were prepared substantially in the same manner as in Example 1 except that the lithium nickel-manganese-based composite oxide of Li_{1.05}Ni_{0.75}Mn_{0.24}Al_{0.01}O₂ itself was used as the positive electrode active material without the yttrium coating process in preparing the positive electrode active material.

### Comparative Example 2

A positive electrode active material and a rechargeable lithium battery cell were prepared substantially in the same manner as in Example 1 except that aluminium sulfate instead of the yttrium nitrate was added to the distilled water solvent in preparing the positive electrode active material, wherein an aluminium content (e.g., amount) of the aluminium sulfate was designed to be 1.0 mol% based on 100 mol% of the total metal excluding lithium in the final positive electrode active material.

### Evaluation Example 1: Surface Analysis of Positive Electrode Active Material

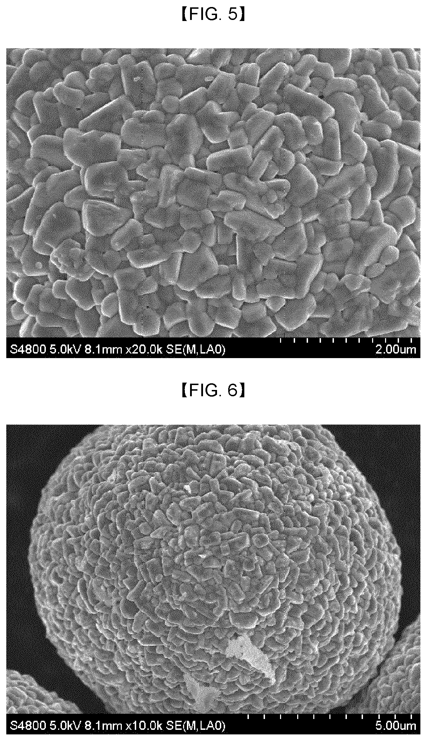

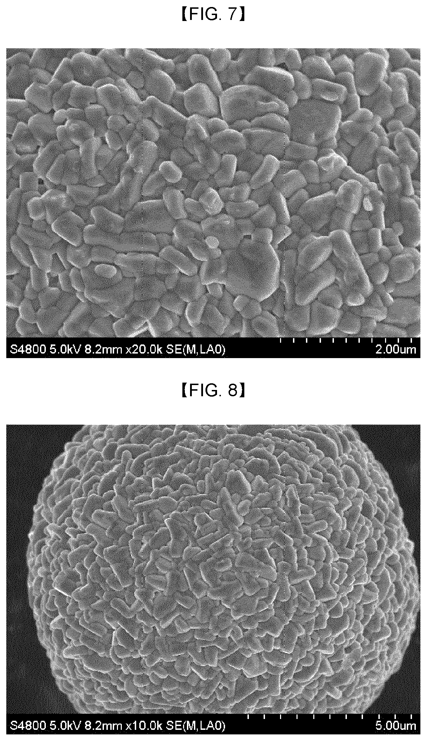

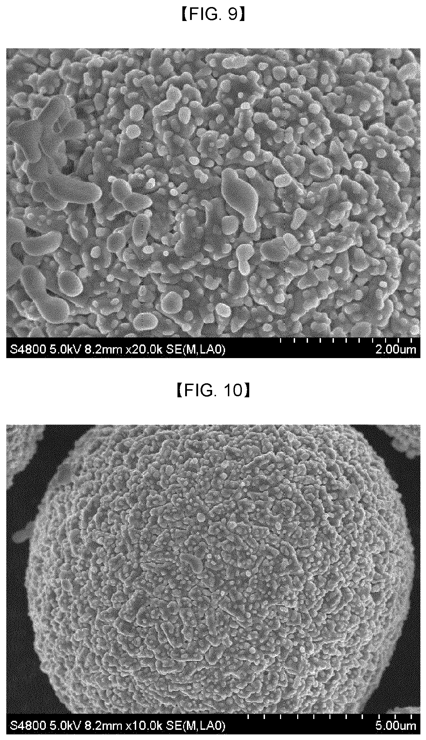

Images of the positive electrode active materials of Example 3 and Comparative Examples 1 and 2 were respectively taken with a scanning electron microscope for comparison. FIGS. 5 and 6 are SEM images of the particle surfaces of the positive electrode active material of Comparative Example 1 without coating, FIGS. 7 and 8 are SEM images of the particle surfaces of the positive electrode active material of Comparative Example 2 with only aluminium coating, and FIGS. 9 and 10 are SEM images of the particle surfaces of the positive electrode active material of Example 3. Referring to FIGS. 5 to 10, the positive electrode active material of Example 3 was confirmed to have a different surface shape from those of Comparative Examples 1 and 2.

### Evaluation Example 2: Analysis of Yttrium Content on the Surface of Positive Electrode Active Material

The positive electrode active materials of Examples 1 to 4 and Comparative Examples 1 to 2 was analyzed with respect to an yttrium content (e.g., amount) on the surface through energy profiling energy dispersive spectroscopy (EP-EDS), and the results are shown in Table 1. EP-EDS (AMETEK Octane Elite) was performed under the following conditions: EDS vacc: 15kV, current: 10uA, live time: 90s.

**Table 1**

| | Yttrium input a mount (mol%) | Yttrium content (at%) on the surfa ce of the positive electrode active material |
|---|---|---|
| Example 1 | 0.2 | 0.48 |
| Example 2 | 0.5 | 1.08 |
| Example 3 | 1.0 | 1.82 |
| Example 4 | 2.0 | 3.54 |
| Comparative Example 1 | 0 | 0 |
| Comparative Example 2 | Al 1.0 | 0 |

Referring to Table 1, the positive electrode active materials of Examples 1 to 4 were confirmed to have an yttrium content (e.g., amount) within a suitable or appropriate range on the positive electrode active material surface.

### Evaluation Example 3: Initial Charge/Discharge Capacity and Efficiency Evaluation

The rechargeable lithium batteries according to Examples 1 to 4 and Comparative Examples 1 to 2 were charged to an upper limit voltage of 4.45 V at a constant current of 0.2 C and to 0.05 C at the constant voltage and then, discharged to a cut-off voltage of 3.0 V at 0.2 C at 25 °C for initial charge and discharge. In Table 2, initial charge capacity, initial discharge capacity, and a ratio of the latter to the former as efficiency (Initial charge/discharge efficiency) are shown.

### Evaluation Example 4: High-temperature Cycle-life Characteristics

After the initial charge and discharge of Evaluation Example 3, the cells were 50 cycles or more charged and discharged at 1.0 C within a voltage range of 3.0 V to 4.45 V at 45 °C to calculate a ratio (50th capacity retention rate (%) of 50^{th} cycle discharge capacity to the initial discharge capacity, and the results are shown in Table 2.

**Table 2**

| | Metal and metal content on the surface of the positive electrode active material | Initial Charge capacity (mAh/g) | Initial Discharge capacity (mAh/g) | Initial charge/dis charge efficiency (%) | 50th capacity retentio n rate (%) |
|---|---|---|---|---|---|
| Example 1 | Y 0.48 at% | 229.7 | 194.1 | 84.5 | 92.5 |
| Example 2 | Y 1.08 at% | 228.8 | 194.0 | 84.8 | 93.4 |
| Example 3 | Y 1.82 at% | 226.7 | 193.7 | 85.4 | 94.8 |
| Example 4 | Y 3.54 at% | 224.1 | 192.3 | 85.8 | 94.5 |
| Comparative Example 1 | - | 229.5 | 194.4 | 84.7 | 91.5 |
| Comparative Example 2 | Al 1 mol% | 227.6 | 190.0 | 83.5 | 92.3 |

Referring to Table 2, the rechargeable lithium battery cells of Examples 1 to 4 not only realized higher or equivalent initial charge and discharge capacity and efficiency characteristics to those of the comparative examples but also improved or maintained high temperature cycle-life characteristics.

On the contrary, Comparative Example 1 proceeding with no coating was confirmed to exhibit inferior cycle-life characteristics under high voltage and high temperature conditions to those of Examples 1 to 4. In addition, Comparative Example 2 proceeding with aluminium coating alone exhibited insufficient initial charge/discharge efficiency and cycle-life characteristics under high voltage and high temperature conditions, compared to Examples 1 to 4.

While the subject matter of this present disclosure has been described in connection with what is presently considered to be practical example embodiments, it is to be understood that the present disclosure is not limited to the disclosed embodiments. On the contrary, it is intended to cover various suitable modifications and equivalent arrangements included within the scope of the appended claims and equivalents thereof.

### Description of Symbols

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
core particles comprising a layered lithium nickel-manganese-based composite oxide; and
an yttrium-containing coating layer on the surface of the core particles;
wherein an yttrium content on the surface of the positive electrode active material, as measured by energy profiling energy dispersive spectroscopy (EP-EDS), is about 0.1 at% to about 5.0 at% based on 100 at% of the total metal excluding lithium.

2. The positive electrode active material as claimed in claim 1, wherein:
in the layered lithium nickel-manganese-based composite oxide, based on 100 mol% of a total metal excluding lithium, a nickel content is about 60 mol% to about 80 mol% and a manganese content is greater than or equal to about 10 mol%.

3. The positive electrode active material as claimed in claim 1 or claim 2, wherein:
the layered lithium nickel-manganese-based composite oxide further comprises aluminium, and in the layered lithium nickel-manganese-based composite oxide, an aluminium content is greater than 0 mol% and less than or equal to about 3 mol% based on 100 mol% of a total metal excluding lithium, optionally wherein:
a concentration gradient difference of aluminium within the core particle is less than or equal to about 0.05 mol%.

4. The positive electrode active material as claimed in any one of claims 1 to 3, wherein:
in the layered lithium nickel-manganese-based composite oxide, a cobalt content is about 0 mol% to about 1 mol% based on 100 mol% of a total metal excluding lithium.

5. The positive electrode active material as claimed in any one of claims 1 to 4, wherein:
the layered lithium nickel-manganese-based composite oxide is represented by Chemical Formula 1:
Chemical Formula 1 Liₐ₁Nix₁Mny₁Alz₁M¹_{w1}O_{2-b1}X_{b1}
wherein, in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, and Zr, and X is one or more elements selected from F, P, and S.

6. The positive electrode active material as claimed in any one of claims 1 to 5, wherein:
the yttrium-containing coating layer is in a form of a film that continuously surrounds the surface of the core particle.

7. The positive electrode active material as claimed in any one of claims 1 to 6, wherein:
(i) a thickness of the yttrium-containing coating layer is about 30 nm to about 500 nm; and/or
(ii) a deviation in the thickness of the yttrium-containing coating layer within a single positive electrode active material particle is less than or equal to 20%.

8. The positive electrode active material as claimed in any one of claims 1 to 7, wherein:
an average particle diameter (D₅₀) of the positive electrode active material is about 2 µm to about 18 µm.

9. A method for preparing a positive electrode active material, comprising:
(i) preparing core particles comprising a layered lithium nickel-manganese-based composite oxide;
(ii) adding and mixing an yttrium raw material into an aqueous solvent to prepare a coating solution;
(iii) adding and mixing the core particles into the coating solution to prepare a mixed solution; and
(iv) removing the aqueous solvent from the mixed solution, and then drying and performing heat treatment for the obtained product to obtain a positive electrode active material.

10. The method for preparing the positive electrode active material as claimed in claim 9, wherein:
in the layered lithium nickel-manganese-based composite oxide, a nickel content is about 60 mol% to about 80 mol%, a manganese content is greater than or equal to about 10 mol%, an aluminium content is greater than about 0 mol% and less than or equal to about 3 mol%, and a cobalt content is about 0 mol% to about 0.01 mol% based on 100 mol% of a total metal excluding lithium.

11. The method for preparing the positive electrode active material as claimed in claim 9 or claim 10, wherein:
an yttrium content in the yttrium raw material is about 0.1 mol% to about 3.0 mol% based on 100 mol% of a total metal excluding lithium in the positive electrode active material.

12. The method for preparing the positive electrode active material as claimed in any one of claims 9 to 11, wherein:
(i) pH of the coating solution including the yttrium raw material mixed in the aqueous solvent is about 1.5 to about 3.5, and
pH of the mixed solution, in which the core particles are added to the coating solution and mixed, is about 4.5 to about 8.5; and/or
(ii) the heat treatment is performed at 700 °C to 850 °C.

13. A positive electrode, comprising:
a positive electrode current collector, and
a positive electrode active material layer on the positive electrode current collector,
wherein the positive electrode active material layer comprises the positive electrode active material as claimed in any one of claims 1 to 8.

14. The positive electrode as claimed in claim 13, wherein:
(i) a loading level of the positive electrode active material layer is about 10 mg/cm² to about 40 mg/cm²; and/or
(ii) a density of the positive electrode active material layer is about 3.3 g/cc to about 3.7 g/cc.

15. A rechargeable lithium battery, comprising:
the positive electrode as claimed in claim 13 or claim 14;
a negative electrode; and
an electrolyte, optionally wherein:
a charging voltage of the rechargeable lithium battery is greater than or equal to about 4.45 V.
